# EUROPEAN PATENT APPLICATION

(11) **EP 1 768 382 A1**
(43) Date of publication of application: **28.03.2007**
(21) Application number: 05020722.4
(22) Date of filing: 22.09.2005
(51) Int. Cl.: H04N 5/00, H04N 5/44

(54) **Media center operating mode selection control method and system**

(71) Applicant: Inventec Corporation, Shih-Lin District Taipei (TW)
(72) Inventor: Liu, Anti, Shih-Lin District Taipei (TW); Yang, Michael, Shih-Lin District Taipei (TW)
(74) Representative: Manitz, Finsterwald & Partner GbR

(57) **Abstract**

A media center operating mode selection control method and system is proposed, which is designed for use with a media center system to provide an easy-to-use operating mode selection control procedure, which is characterized by the provision of all possible operating modes (i.e., various manners of interlinking between media source devices and media display devices connected to the media center system) in a mapping table, and the provision of a press button that can be repeatedly pressed by the user to cyclically switch through all the available operating modes. Compared to the prior art, this method of user operation is significantly easier to implement without requiring the user to get familiar with technical jargons and involve in complicated user operation procedures, and is therefore more user-friendly and advantageous to use than prior art.

## Description

### BACKGROUND OF THE INVENTION

### 1. Field of the Invention:

This invention relates to multimedia technology, and more particularly, to a media center operating mode selection control method and system which is designed for use in conjunction with a media center system that is connected to a number of media source devices (MSD) and a number of media display devices (MDD) for providing the user of the media center with an easy-to-use operating mode selection control function that allows the user to easily and quickly select a desired operating mode and activate the media center system to perform the user-selected operating mode.

### 2. Description of Related Art:

A media center system is a multi-functional multimedia platform that utilizes a PC (personal computer) or a dedicated electronic device as a central control unit which is connected concurrently to a number of media source devices (MSD) and a number of media display devices (MDD), where the MSDs can be selected from the group including Internet linking device, CD/DVD player, cable TV receiver, wireless TV receiver, video recorder, video game machine, multimedia player, MP3 player, to name just a few; while the MDDs can be selected from the group including HDTV (High Definition TV), LCD (Liquid Crystal Display), plasma display, stereo loudspeaker, to name just a few. The user can utilize the media center system to produce TV programs, video games, music, etc., all at the same time so as to enjoy these media programs simultaneously.

For instance, the user can choose to activate the media center system to interlink the Internet linking device with the LCD, the cable TV receiver with the HDTV, and the MP3 player with the stereo loudspeaker, so that the user can simultaneously watch a TV program (such as a major league baseball game) through the HDTV, chat with online friends (who are also major league baseball fans, for example) through the LCD which displays the graphic user interface of a Web-based chat room, and listen to music through the stereo loudspeaker. Furthermore, the user can also additionally choose to activate the media center system to interlink the HDTV with the CD/DVD recorder/player, so as to record the TV program onto a CD or DVD.

As described above, since the user can arbitrarily choose to activate to interlink any of the MSDs with any of MDDs in a many-to-many correspondence, one apparent problem in the use of the media center system is that the user operation procedure would be very complicated. For example, in the case that the user wants to activate the media center system to interlink the Internet linking device with the LCD, the cable TV receiver with the HDTV, and the MP3 player with the stereo loudspeaker, the user needs to utilize an OSD (On-Screen Display) based control panel that is displayed on a screen to select the desired MSDs (in this case, the Internet linking device, the cable TV receiver, and the MP3 player) from a menu, and then choose to link the selected MSDs respectively to the intended MDDs (in this case, the LCD, the HDTV, and the stereo loudspeaker). Undoubtedly, this user operation procedure is very complicated and requires the user to be familiar with technical jargons displayed on the screen, and is therefore a highly user-unfriendly way of operation.

### SUMMARY OF THE INVENTION

It is therefore an objective of this invention to provide a media center operating mode selection control method and system which is capable of providing a more user-friendly interface for easy and quick user operation of a media center system.

The media center operating mode selection control method and system according to the invention is designed for use in conjunction with a media center system that is connected to a number of media source devices (MSD) and a number of media display devices (MDD) for providing the user of the media center with an easy-to-use operating mode selection control function that allows the user to easily and quickly select a desired operating mode and activate the media center system to perform the user-selected operating mode.

The media center operating mode selection control method according to the invention comprises: (1) predefining an operating mode mapping table that predefines a number of operating modes each of which represents a predefined manner of interlinking between a selected group of the media source devices and a selected group of the media display devices; (2) in actual operation, responding cyclically to a user-initiated operating mode selecting event by issuing a corresponding operating mode selection message; (3) responding to the operating mode selection message by selecting a corresponding operating mode from the operating mode mapping table and retrieving a set of linking parameters associated with the selected operating mode; and (4) switching the media center system to the user-selected operating mode based on the retrieved linking parameters from the operating mode mapping table for interlinking nominated media source devices to corresponding media display devices associated with the selected operating mode to thereby activate the media center system to operate in the user-selected operating mode.

In terms of architecture, the media center operating mode selection control system according to the invention comprises: (a) a user interface module, which is capable of providing a user interface for responding cyclically to a user-initiated operating mode selecting event by issuing a corresponding operating mode selection message; (b) an operating mode configuration setting module, which is used to store a predefined operating mode mapping table that predefines a number of operating modes each of which represents a predefined manner of interlinking between a selected group of the media source devices and a selected group of the media display devices, and which is capable of responding to the operating mode selection message from the user interface module by selecting a corresponding operating mode from the operating mode mapping table and retrieving a set of linking parameters associated with the selected operating mode; and (c) an operating mode switching module, which is capable of switching the media center system to the user-selected operating mode based on the linking parameters retrieved by the operating mode configuration setting module for interlinking nominated media source devices to corresponding media display devices associated with the selected operating mode and activating the media center system to operate in the user-selected operating mode.

The media center operating mode selection control method and system according to the invention is characterized by the provision of all possible operating modes (i.e., various manners of interlinking between the MSDs and MDDs) in a table, and the provision of a press button that can be repeatedly pressed by the user to cyclically switch through all the available operating modes. Compared to the prior art, this method of user operation is significantly easier to implement without requiring the user to be familiar with technical jargons and involve in complicated user operation procedures, and is therefore more user-friendly and advantageous to use than prior art.

### BRIEF DESCRIPTION OF DRAWINGS

The invention can be more fully understood by reading the following detailed description of the preferred embodiments, with reference made to the accompanying drawings, wherein:
FIG. 1 is a schematic diagram showing the application and modularized architecture of the media center operating mode selection control system according to the invention; and
FIG. 2 is a schematic diagram showing the data structure of an example of a operating mode mapping table utilized by the media center operating mode selection control system of the invention.

### DETAILED DESCRIPTION OF PREFERRED EMBODIMENTS

The media center operating mode selection control method and system according to the invention is disclosed in full details by way of preferred embodiments in the following with reference to the accompanying drawings.

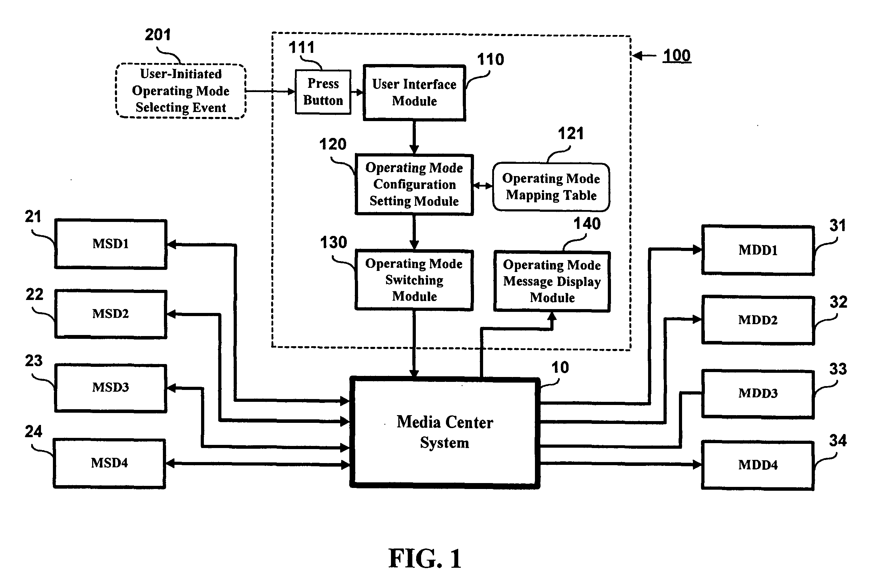

FIG. 1 is a schematic diagram showing the application architecture and modularized object-oriented component model of the media center operating mode selection control system according to the invention (as the part enclosed in the dotted box indicated by the reference numeral 100). As shown, the media center operating mode selection control system of the invention 100 is designed for use in conjunction with a media center system 10 that is connected to a number of media source devices (MSD) 21, 22, 23, 24 and a number of media display devices (MDD) 31, 32, 33, 34, where MSDs 21, 22, 23, 24 are selected from the group including, but not limited to, Internet linking device, CD/DVD player, cable TV receiver, wireless TV receiver, video recorder, and video game machine, multimedia player, MP3 player; while the MDDs 31, 32, 33, 34, are selected from the group including, but not limited to, HDTV (High Definition TV), LCD (Liquid Crystal Display), plasma display, and stereo loudspeaker (note that the example of FIG. 1 shows only 4 MSDs and 4 MDDs for demonstrative purpose only; in practice, the number of MSDs and MDDs that can be connected to the media center system 10 is unrestricted and depends on the capacity of the media center system 10).

In actual application, the media center operating mode selection control system of the invention 100 is capable of for providing the user of the media center system with an easy-to-use operating mode selection control function that allows the user to select a desired operating mode and promptly activate the media center system 10 to perform the user-selected operating mode.

As shown in FIG. 1, the modularized architecture of the media center operating mode selection control system of the invention 100 comprises: (a) a user interface module 110; (b) an operating mode configuration setting module 120; and (c) an operating mode switching module 130; and can further optionally comprise an operating mode message display module 140.

The user interface module 110 is designed to provide a user interface for responding in a cyclical manner to each user-initiated operating mode selecting event 201 by issuing a corresponding operating mode selection message to the operating mode configuration setting module 120. In practical implementation, for example, the user interface module 110 includes a press button 111, which can be either a tangible physical button or an on-screen graphic button, and which can be either arranged on the control panel (not shown) of the media center system 10 or on a remote control unit (not shown). In operation, the user can repeatedly press this press button 111 to cyclically initiate a user-initiated operating mode selecting event 201 that causes the selection of a particular operating mode. For example, in the case that a total of 4 operating modes are predefined for the media center system 10, respectively designed by MODE(1), MODE(2), MODE(3), and MODE(4), then the user needs just to press the press button 111 once to select MODE(1), twice to select MODE(2), three times to select MODE(3), four times to select MODE(4). If the user press the press button 111 five times, the mode selection will cyclically return to MODE(1), and so forth.

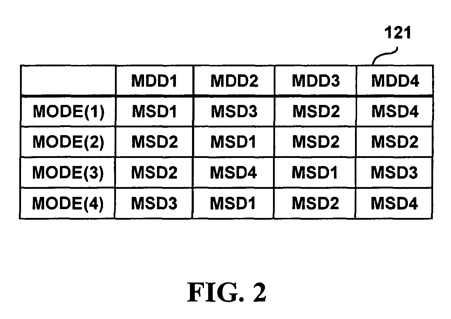

The operating mode configuration setting module 120 is used to prestore a predefined operating mode mapping table 121, as for example the one shown in FIG. 2, that stores a number of predefined operating modes each of which represents a predefined manner of linking between a selected group of the MSDs 21, 22, 23, 24 to a selected group of the MDDs 31, 32, 33, 34. In actual operation, the operating mode configuration setting module 120 is capable of responding to the operating mode selection message from the user interface module 110 by selecting a corresponding operating mode from the operating mode mapping table 121 and retrieving a set of linking parameters associated with the selected operating mode. In the operating mode mapping table 121 shown in FIG. 2, for example, the MSDs 21, 22, 23, 24 are respectively designated by MSD1, MSD2, MSD3, and MSD4, and the MDDs 31, 32, 33, 34 are respectively designated by MDD1, MDD2, MDD3, and MDD4; and the content of the operating mode mapping table 121 shows that MODE(1) represents the interlinking of MDD1 with MDS1, MDD2 with MDS3, MDD3 with MSD2, and MDD4 with MSD4; and MODE(2) represents the interlinking of MDD 1 with MDS2, MDD2 with MDS1, MDD3 with MSD2, and MDD4 with MSD2; and so forth (note that the operating modes shown in FIG. 2 are only intended for demonstrative purpose; and in practice; these operating modes can be an arbitrary design choice that can be arbitrarily predefined by the user or the manufacturer).

The operating mode switching module 130 is capable of switching the media center system 10 to the user-selected operating mode based on the linking parameters retrieved by the operating mode configuration setting module 120 for interlinking specified MSDs with their corresponding MDDs and activating the media center system 10 to operate in the user-selected operating mode.

The operating mode message display module 140 is a display device that can be selected from the group including, but not limited to, LCD (Liquid Crystal Display), digital tube, and VFD (Vacuum Fluorescent Display), and which is capable of displaying a set of user-perceivable messages about the currently-selected operating mode. For example, if the user presses the press button 111 for three times to select MODE(3), then the operating mode message display module 140 will display a set of related messages about this operating mode MODE(3), such as the index number of the operating mode and the associated MSDs and MDDs that are interlinked under this operating mode. This feature allows the user to quickly switch to this operating mode afterwards in the next time when the user wants to use the same operating mode again.

In the following description of an example of a practical application of the invention, it is assumed that the media center system 10 is predefined with 4 operating modes: MODE(1), MODE(2), MODE(3), and MODE(4) as shown in FIG. 2, and the user wants to select the third operating mode MODE(3).

Referring to FIG. 1 together with FIG. 2, in actual operation, since the user wants to select the third operating mode MODE(3), the user needs just to press the press button 111 for three times. This action will cause the user interface module 110 to respond by issuing a corresponding operating mode selection message indicative of the selection of MODE(3). In response, the operating mode configuration setting module 120 is activated to retrieve a set of MODE(3)-related linking parameters from the operating mode mapping table 121, where the linking parameters as shown in FIG. 2 are [MDD1-MSD2, MDD2-MSD4, MDD3-MSD1, MDD4-MSD3] (which indicates that MDD1 is to be interlinked with MSD2, MDD2 is to be interlinked with MSD4, MDD3 is to be interlinked with MSD 1, and MDD4 is to be interlinked with MSD3). These linking parameters are then transferred to the operating mode switching module 130, causing the operating mode switching module 130 to interlink the nominated MDDs with the nominated MSDs that are predefined to MODE(3). At this time, the operating mode message display module 140 is also activated to display a set of user-perceivable messages about the currently-selected operating mode MODE(3), including, for example, the index number of MODE(3) and the names of the interlinked MDDs and MSDs.

In conclusion, the invention provides a media center operating mode selection control method and system for use with a media center system to provide the user of the media center with an easy-to-use operating mode selection control procedure, which is characterized by the provision of all possible operating modes (i.e., various manners of interlinking between the MSDs and MDDs) in a table, and the provision of a press button that can be repeatedly pressed by the user to cyclically switch through all the available operating modes. Compared to the prior art, this method of user operation is significantly easier to implement without requiring the user to be familiar with technical jargons and involve in complicated user operation procedures, and is therefore more user-friendly and advantageous to use than prior art.

The invention has been described using exemplary preferred embodiments. However, it is to be understood that the scope of the invention is not limited to the disclosed embodiments. On the contrary, it is intended to cover various modifications and similar arrangements. The scope of the claims, therefore, should be accorded the broadest interpretation so as to encompass all such modifications and similar arrangements.

## Claims

1. A media center operating mode selection control method for use on a media center system that is connected to a number of media source devices and a number of media display devices for providing a user-initiated operating mode selection control function;
the media center operating mode selection control method comprising:
predefining an operating mode mapping table that predefines a number of operating modes each of which represents a predefined manner of interlinking between a selected group of the media source devices and a selected group of the media display devices;
in actual operation,
responding cyclically to a user-initiated operating mode selecting event by issuing a corresponding operating mode selection message;
responding to the operating mode selection message by selecting a corresponding operating mode from the operating mode mapping table and retrieving a set of linking parameters associated with the selected operating mode; and
switching the media center system to the user-selected operating mode based on the retrieved linking parameters from the operating mode mapping table for interlinking nominated media source devices to corresponding media display devices associated with the selected operating mode to thereby activate the media center system to operate in the user-selected operating mode.

2. The media center operating mode selection control method of claim 1, wherein the media source devices are selected from the group including Internet linking device, CD/DVD player, cable TV receiver, wireless TV receiver, video recorder, and video game machine, and multimedia player.

3. The media center operating mode selection control method of claim 1, wherein the media display devices are selected from the group including HDTV (High Definition TV), LCD (Liquid Crystal Display), plasma display, and stereo loudspeaker.

4. The media center operating mode selection control method of claim 1, further comprising:
displaying a set of user-perceivable messages about the currently-selected operating mode.

5. A media center operating mode selection control system for use with a media center system that is connected to a number of media source devices and a number of media display devices for providing a user-initiated operating mode selection control function;
the media center operating mode selection control system comprising:
a user interface module, which is capable of providing a user interface for responding cyclically to a user-initiated operating mode selecting event by issuing a corresponding operating mode selection message;
an operating mode configuration setting module, which is used to store a predefined operating mode mapping table that predefines a number of operating modes each of which represents a predefined manner of interlinking between a selected group of the media source devices and a selected group of the media display devices, and which is capable of responding to the operating mode selection message from the user interface module by selecting a corresponding operating mode from the operating mode mapping table and retrieving a set of linking parameters associated with the selected operating mode; and
an operating mode switching module, which is capable of switching the media center system to the user-selected operating mode based on the linking parameters retrieved by the operating mode configuration setting module for interlinking nominated media source devices to corresponding media display devices associated with the selected operating mode and activating the media center system to operate in the user-selected operating mode.

6. The media center operating mode selection control system of claim 5, wherein the media source devices are selected from the group including Internet linking device, CD/DVD player, cable TV receiver, wireless TV receiver, video recorder, and video game machine, and multimedia player.

7. The media center operating mode selection control system of claim 5, wherein the media display devices are selected from the group including HDTV (High Definition TV), LCD (Liquid Crystal Display), plasma display, and stereo loudspeaker.

8. The media center operating mode selection control system of claim 5, further comprising:
an operating mode message display module, which is capable of displaying a set of user-perceivable messages about the currently-selected operating mode.

9. The media center operating mode selection control system of claim 5, wherein the operating mode message display module is selected from the group including LCD (Liquid Crystal Display), digital tube, and VFD (Vacuum Fluorescent Display).
